# EUROPÄISCHE PATENTANMELDUNG

(11) **EP 4 421 471 A1**
(43) Veröffentlichungstag der Anmeldung: **28.08.2024**
(21) Anmeldenummer: 23157878.2
(22) Anmeldetag: 22.02.2023
(51) Int. Cl.: G01M 13/028, G01M 99/00, B65G 43/00, G01M 13/045, B65G 43/02

(54) **PRÜFVORRICHTUNG, PRÜFVERFAHREN COMPUTERPROGRAMMPRODUKT, DIAGNOSESYSTEM UND SIMULATIONSPROGRAMMPRODUKT**

(71) Anmelder: Siemens Aktiengesellschaft, 80333 München (DE)
(72) Erfinder: Klehr, Stefan, 76764 Rheinzabern (DE); Richter, Siegfried, 91207 Lauf (DE); von Dosky, Stefan, 76149 Karlsruhe (DE)
(74) Vertreter: Siemens Patent Attorneys

(57) **Zusammenfassung**

Die Erfindung betrifft eine Prüfvorrichtung (10) zum Prüfen eines Schädigungszustands von Rollen (22) eines Rollentransportsystems (20). Die Prüfvorrichtung (10) umfasst zumindest einen Vibrationssensor (16) zum Erfassen von Vibrationen (25) an zumindest einer der Rollen (22). Erfindungsgemäß ist die Prüfvorrichtung (10) zu einer Fahrt als Transportgut auf dem Rollentransportsystem (20) ausgebildet und der Vibrationssensor (16) ist dazu ausgebildet, bei einem Überfahren einer der Rollen (22) deren Vibrationen (25) zu erfassen. Die Erfindung betrifft auch ein entsprechendes Verfahren (100) zum Prüfen eines Schädigungszustands einer Rolle (22) mit einer derartigen Prüfvorrichtung (10). Weiter betrifft die Erfindung ein entsprechend ausgebildetes Computerprogrammprodukt (55) und ein Diagnosesystem (70) mit einer derartigen Prüfvorrichtung (10). Ferner betrifft die Erfindung ein Simulationsprogrammprodukt (80) zum Simulieren eines Betriebsverhaltens einer korrespondierenden Prüfvorrichtung (10).

## Beschreibung

Die Erfindung betrifft eine Prüfvorrichtung und ein damit durchführbares Prüfverfahren. Die Erfindung betrifft ebenso ein Computerprogrammprodukt zum Durchführen eines solchen Prüfverfahrens und ein Diagnosesystem. Ferner betrifft die Erfindung ein Simulationsprogrammprodukt.

Die Internationale Anmeldung WO 2016/115591 A1 offenbart ein Verfahren zum Prüfen eines Verschleißzustands einer Rolle eines Fördersystems. Darin wird eine Anzahl an Umdrehungen der Rolle erfasst und mit einer Referenz-Umdrehungszahl verglichen. Anhand der Differenz zwischen der erfassten Anzahl an Umdrehungen und der Referenz-Umdrehungsanzahl wird der vorliegende Verschleißzustand der Rolle bestimmt.

Rollentransportsysteme mit steigender Komplexität werden in einer Vielzahl an Anwendungsfällen eingesetzt, beispielsweise in der Paketlogistik, Gepäckbeförderung oder in Fertigungsanlagen. Dabei wird eine steigende Anzahl an Rollen eingesetzt. Umso wichtiger ist es daher, den Schädigungs- bzw. Verschleißzustand der Rollen frühzeitig und zuverlässig zu erkennen, um Ausfälle des Rollentransportsystems zu vermeiden. Gleichzeitig besteht die Zielsetzung, eine solche Erkennung möglichst einfach und kosteneffizient durchzuführen. Der Erfindung liegt die Aufgabenstellung zugrunde, eine Möglichkeit zum Prüfen von Rollen in einem Rollentransportsystem bereitzustellen, die in zumindest einem der skizzierten Aspekte eine Verbesserung bietet.

Die Aufgabenstellung wird durch eine erfindungsgemäße Prüfvorrichtung gelöst, die zum Prüfen eines Schädigungszustands von Rollen eines Rollentransportsystems ausgebildet ist. Der Schädigungszustand umfasst Schädigungen aufgrund unsachgemä-ßer Handhabung und Verschleiß an der Rolle bzw. deren Komponenten, beispielsweise Lager, Antriebsverzahnungen oder Antriebe. Die Prüfvorrichtung weist zumindest einen Vibrationssensor auf, der zum Erfassen von Vibrationen an zumindest einer der Rollen ausgebildet ist. Die zu erfassenden Vibrationen können Vibrationen senkrecht zu einer Drehachse der Rollen und Vibrationen entlang der Drehachse der Rollen umfassen. Erfindungsgemäß ist die Prüfvorrichtung zu einer Fahrt als Transportgut auf dem zu prüfenden Rollentransportsystem ausgebildet. Die Prüfvorrichtung weist Abmessungen und ein Gewicht auf, die ein Abfahren zumindest eines zu prüfenden Abschnitts des Rollentransportsystems erlauben. Dabei wird die Prüfvorrichtung wie ein übliches Transportgut vom Rollentransportsystem angetrieben. Weiter erfindungsgemäß ist der Vibrationssensor dazu ausgebildet, bei einem Überfahren zumindest einer der Rollen deren Vibrationen zu erfassen. Dementsprechend kann der Vibrationssensor derart an der Prüfvorrichtung angebracht sein, dass ein Vibrationsverhalten zumindest einer Rolle während oder unmittelbar nach dem Überfahren dieser Rolle separat erfassbar ist. Die Prüfvorrichtung kann einen Speicher, also einen Datenspeicher, aufweisen, der mit dem zumindest einen Vibrationssensor verbunden ist. Dadurch sind die separat erfassten Vibrationen mehrerer Rollen, die bei einer Fahrt auf dem Rollentransportsystem überfahren werden, speicherbar und auswertbar. Alternativ oder ergänzend kann der Vibrationssensor mittelbar oder unmittelbar mit einer Kommunikationseinheit, insbesondere einer Funkkommunikationseinheit, ausgestattet sein, durch die eine kommunikative Datenverbindung mit einer übergeordneten Auswertungseinheit herstellbar ist. Dementsprechend kann die Prüfvorrichtung eine Kommunikationseinheit aufweisen. Alternativ kann die übergeordnete Auswertungseinheit zur Prüfvorrichtung gehören.

Die erfindungsgemäße Prüfvorrichtung erlaubt es in einfacher Weise, das Vibrationsverhalten jeder der Rollen des Rollentransportsystems separat zu erfassen und auszuwerten. Messwerte von Vibrationen sind mit reduziertem Speicherbedarf speicherbar und durch eine Vielzahl an vorhandenen Algorithmen auswertbar. Gespeicherte Datensätze von Messwerten von Vibrationen sind ferner als Trainingsdatensätze für eine Künstliche Intelligenz bereitstellbar. Ist die erfindungsgemäße Prüfvorrichtung begleitend zu einem Produktivbetrieb des Rollentransportsystems einsetzbar und kann zwischen anderen Transportgütern auf das Rollentransportsystem gesetzt werden. Das Vibrationsverhalten von Rollen ist charakteristisch für deren Schädigungszustand, so dass mit der erfindungsgemäßen Prüfvorrichtung unmittelbar eine besonders aussagekräftige Größe gemessen wird. Insgesamt bietet die erfindungsgemäße Prüfvorrichtung eine zuverlässige, wirtschaftliche und einfache Möglichkeit, Rollen eines Rollentransportsystems zu überprüfen.

In einer Ausführungsform der beanspruchten Prüfvorrichtung ist der Vibrationssensor als Beschleunigungssensor ausgebildet. Ein derartiger Vibrationssensor ist derart an der Prüfvorrichtung angebracht, dass bei einem Überfahren der zu prüfenden Rolle der Vibrationssensor durch die Vibrationen der Rolle selbst beschleunigt wird. Der Beschleunigungssensor kann als Mehrachsbeschleunigungssensor ausgebildet sein, und dadurch eine gesteigerte Messgenauigkeit erzielen. Ebenso sind bei einem Mehrachsbeschleunigungssensor Vibrationen senkrecht zur Drehachse der Rolle und Vibrationen entlang der Drehachse der Rolle erfassbar und unterscheidbar. Gleicherma-ßen ist die Bewegung der Prüfvorrichtung entlang einer Fahrtrichtung auf dem Rollentransportsystem erfassbar. Insbesondere sind dadurch unterschiedliche Schädigungsarten der Rolle selbsttätig unterscheidbar, beispielsweise bei einer Auswertung von Messwerten durch eine Künstliche Intelligenz. Dies erlaubt insgesamt ein umfassendes Prüfen des Schädigungszustands.

Alternativ oder ergänzend kann der Vibrationssensor als Stö-ßel ausgebildet sein, der mit einer Wegerfassung ausgestattet ist. Die Wegerfassung ist dazu ausgebildet, einen Hub des Stößels zu erfassen. Der Stößel ist dazu ausgebildet, die zu prüfende Rolle unmittelbar oder mittelbar zu kontaktieren. Der Stößel kann durch eine Federkraft beaufschlagt sein, und somit als Federstößel ausgebildet sein. Weiter kann der Stö-ßel durch sein Eigengewicht an die Rollen angedrückt werden oder durch ein Magnetfeld. Die Vibrationen der entsprechenden Rolle, insbesondere Vibrationen senkrecht zur deren Drehachse, bewegen den Stößel beim Überfahren der entsprechenden Rolle. Das Bewegen des Stößels wiederum wird durch die Wegerfassung, die einen Wegerfassungssensor umfassen kann, beispielsweise als Zeitreihe von Datenpunkten erfasst. Der Wegerfassungssensor kann als Inkrementalgeber, als Beschleunigungssensor und/oder als optischer Sensor ausgebildet sein. Der optische Sensor, der als Wegerfassungssensor dient, kann beispielsweise als Laserentfernungsmesser ausgebildet sein. Dadurch ist eine berührungslose Wegerfassung am Stößel umsetzbar. Der als Stößel mit Wegerfassung ausgebildete Vibrationssensor ist kompakt und dazu geeignet, an nur einer einzigen Rolle deren Vibrationen zu erfassen. Eine Datenverarbeitung, bei der Vibrationen unterschiedlicher benachbarter Rollen voneinander zu separieren sind, sind dadurch entbehrlich. Infolgedessen sind auch geringfügige Schädigungen an einer Rolle frühzeitig erkennbar. Ferner kann die Prüfvorrichtung dazu ausgebildet sein, basierend auf erfassten Auslenkungen des Stößels eine Anzahl an überfahrenen Rollen zu erfassen, also abzuzählen. Dadurch wird eine Positionsbestimmung für die Prüfvorrichtung im Rollentransportsystem ermöglicht. Insbesondere kann die Prüfvorrichtung dazu ausgebildet sein, eine Referenzrolle zu erkennen und ihre eigene Position anhand der Anzahl an überfahrenen Rollen zu bestimmen. Ebenso ist dadurch eine Position einer erkannten Rolle mit einem bestimmungswidrigen Schädigungszustand bestimmbar. Eine entsprechende Warnung kann folglich eine Positionsangabe der erkannten Rolle mit bestimmungswidrigem Schädigungszustand umfassen. Die Referenzrolle und/oder die Prüfvorrichtung können mit einem entsprechend geeigneten Identifikationsmittel und/oder Erfassungsmittel ausgestattet sein.

In einer weiteren Ausführungsform der beanspruchten Prüfvorrichtung kann diese mit einem elastischen gelagerten Sensorträger ausgestattet sein. Der Vibrationssensor ist hierbei am Sensorträger befestigt. Der elastisch gelagerte Sensorträger ist dazu geeignet, durch Vibrationen von zumindest einer überfahrenen Rolle ausgelenkt zu werden und somit zu schwingen. Der Sensorträger kann an der Prüfvorrichtung, insbesondere einem Grundkörper der Prüfvorrichtung, elastisch gelagert sein. Die Prüfvorrichtung, insbesondere deren Grundkörper, kann schwerer sein als der elastisch gelagerte Sensorträger mit dem daran angebrachten Vibrationssensor. Die Prüfvorrichtung, insbesondere deren Grundkörper, bilden im Zusammenhang mit dem elastisch gelagerten Sensorträger mit dem Vibrationssensor somit ein starres Gegenlager. Die elastische Lagerung zwischen dem Sensorträger und der Prüfvorrichtung bzw. deren Grundkörper kann durch zumindest ein Federelement und/oder ein Dämpferelement vorgegeben sein. Federelemente und Dämpferelemente sind in einer breiten Spanne an Größen und Stärken verfügbar, so dass ein dynamisches Verhalten des Sensorträgers mit dem Vibrationssensor beim Überfahren einer Rolle in einfacher Weise anpassbar ist. Insbesondere können das Federelement und/oder das Dämpferelement derart ausgebildet sein, dass Resonanzanregungen durch die Vibration der Rollen, Unterdämpfungen und/oder Überdämpfungen vermieden werden. Weiter ist durch entsprechende Auswahl des Federelements eine Druckkraft einstellbar, die durch den Sensorträger auf überfahrene Rollen ausgeübt wird. Hierdurch ist eine mechanische Charakteristik des Sensorträgers gezielt vorgebbar und für eine vorteilhafte Auswertung anpassbar. Dementsprechend ist die Prüfvorrichtung in einfacher Weise dahingehend anpassbar, dass beim Erfassen von Vibrationen an einer Rolle vorteilhaft auswertbare Messwerte zu erwarten sind. Die beanspruchte Prüfvorrichtung ist dadurch in einfacher Weise an eine breite Spanne an Rollentransportsysteme anpassbar. Alternativ kann der Sensorträger durch sein Eigengewicht oder ein Magnetfeld an die Rollen angedrückt werden.

Des Weiteren kann der elastisch gelagerte Sensorträger zu einem gleichzeitigen Kontaktieren von zumindest zwei Rollen an der Prüfvorrichtung angebracht sein. Das Kontaktieren kann ein unmittelbares oder mittelbares Berühren der Rollen sein.

Dementsprechend wird beim Überfahren der Rollen durch den Vibrationssensor eine Kombination von Vibrationen dieser Rollen erfasst. Bei einem Lösen eines Kontakts mit einer Rolle und Herstellen eines Kontakts mit einer benachbarten Rolle, die in Fahrtrichtung der Prüfvorrichtung liegt, ändern sich die erfassten Messwerte der erfassten Vibrationen sprungartig oder stufenartig. Dementsprechend kann die Prüfvorrichtung dazu ausgebildet sein, Vibrationen einer einzelnen Rolle aus Differenzen zwischen Messwerten zu ermitteln, die sich beim Überfahren von Rollen sprungartig bzw. stufenartig ändern. Ebenso sind die überfahrenen Rollen dadurch abzählbar, was wiederum eine Positionsbestimmung der Prüfvorrichtung im Rollentransportsystem erlaubt. Der Sensorträger kann eine entlang der Fahrtrichtung längliche Form aufweisen. Der Vibrationssensor kann dadurch beispielsweise entlang der Fahrtrichtung zwischen zwei Federelementen angeordnet sein, durch die der Sensorträger elastisch gelagert ist. Dabei wirkt der Sensorträger als Hebel, so dass der Vibrationssensor, insbesondere ein Beschleunigungssensor, derart positionierbar ist, dass hinreichende Auslenkungen durch die Vibrationen der Rollen hervorrufbar sind. Der Sensorträger kann ferner als Kufe ausgebildet sein. Die Kufe kann eine Länge und/oder Kufenform aufweisen, die beim Überfahren von Rollen eine Pendelbewegung der Kufe, also des Sensorträgers, hervorruft. Die Pendelbewegung kann eine Periodizität aufweisen, die charakteristisch für einen Abstand der Rollen ist. Dadurch kann eine Anzahl an überfahrenen Rollen durch Auswertung von Messwerten des Vibrationssensors abgezählt werden. Die beanspruchte Prüfvorrichtung erlaubt es, einfache Vibrationssensoren, insbesondere Beschleunigungssensoren, einzusetzen, die eine reduzierte Messempfindlichkeit aufweisen. Dadurch ist die beanspruchte Prüfvorrichtung kosteneffizient herstellbar.

Darüber hinaus kann die beanspruchte Prüfvorrichtung mit zumindest zwei Vibrationssensoren ausgestattet sein, die im Wesentlichen quer zur Fahrtrichtung der Prüfvorrichtung versetzt angeordnet sind. Die zumindest zwei Vibrationssensoren sind dazu geeignet, eine Kurve des Rollentransportsystems zu erkennen, die von der Prüfvorrichtung durchfahren wird. Insbesondere ist zwischen einem kurveninneren und kurvenäußeren Vibrationssensor ein Zeitversatz beim Kontaktieren einer in Fahrtrichtung liegenden Rolle erkennbar. Dadurch ist eine Kurve im Rollentransportsystem erkennbar. Somit ist beispielsweise eine selbsttätige Positionsbestimmung der Prüfvorrichtung durchführbar. Alternativ oder ergänzend kann die Prüfvorrichtung mit einem Gyroskop ausgestattet sein, das dazu ausgebildet ist, eine Kurvenfahrt der Prüfvorrichtung zu erfassen und bei entsprechender Datenauswertung zu erkennen. Ferner kann die beanspruchte Prüfvorrichtung dazu ausgebildet sein, angetriebene und freilaufende Rollen voneinander zu unterscheiden. Dazu kann die Prüfvorrichtung dazu ausgebildet sein, die Messwerte einzelner Rollen auszuwerten und ein Kontaktieren der entsprechenden Rolle zu erkennen. Insbesondere kann hierbei ein Frequenzspektrum von Messwerten der Vibration der entsprechenden Rolle ausgewertet werde oder eine vom Vibrationssensor erfasste Amplitude. Die erfasste Amplitude kann beispielsweise durch eine Stoßfunktion mit den Parametern des Vibrationssensors ausgewertet werden. Derartige Parameter können eine Federkonstante und/oder eine Dämpferkonstante der elastischen Lagerung des Sensorträgers oder des Stößels sein. Ferner kann die beanspruchte Prüfvorrichtung dazu ausgebildet sein, eine Abfolge von angetriebenen und freilaufenden Rollen zu erfassen. Dadurch ist ebenfalls eine Positionsbestimmung der Prüfvorrichtung auf dem Rollentransportsystem möglich. Alternativ oder ergänzend kann die Prüfvorrichtung mit Erfassungsmitteln zu erfassen von mechanischen Markierungen am Rollentransportsystem ausgestattet sein, die als Positionsreferenzen dienen. Weiter alternativ oder ergänzend kann die Prüfvorrichtung dazu ausgebildet sein, Abstände von überfahrenen Rollen zu erfassen. Dadurch können beispielsweise gezielt nach einem Muster beabstandete Rollen im Rollentransportsystem erkannt werden. Eine derartige Rollenabstands-Codierung erlaubt ebenfalls eine Positionsbestimmung der Prüfvorrichtung.

Die beanspruchte Prüfvorrichtung kann dazu ausbildet sein, dass eine vom Vibrationssensor erfasste Rolle frei von einer Gewichtsbelastung durch die Prüfvorrichtung ist. Die Prüfvorrichtung kann beispielsweise einen Grundkörper aufweisen, der im Bereich des Vibrationssensors nicht auf Rollen aufliegt. Die Prüfvorrichtung bzw. deren Grundkörper kann im Bereich des Vibrationssensors eine Rücknahme aufweisen, in der der Vibrationssensor angeordnet sein kann. Dadurch ist insgesamt eine gesteigerte Messgenauigkeit mit der Prüfvorrichtung erzielbar. Dadurch sind Druckkräfte vorgebbar, mit denen beispielsweise ein Sensorträger an beschädigte Rollen beim Überfahren angedrückt wird. Insbesondere können an der Prüfvorrichtung mehrere Sensorträger angeordnet sein, die mit unterschiedlichen Druckkräften an die Rollen angedrückt werden. Die Druckkräfte können durch Federelemente eingestellt sein, über die die Sensorträger an der Prüfvorrichtung elastisch gelagert sind. Eine beschädigte Rolle kann beispielsweise blockieren, wenn sie von einem Sensorträger überfahren wird, der mit reduzierter Druckkraft angedrückt wird. Bei einem Überfahren mit einem Sensorträger, der mit erhöhter Drucckraft angedrückt wird, kann die beschädigte Rollen mitgerissen werden und sich drehen. Dementsprechend ist eine beschädigte Rolle, bei entsprechender Auswertung von Datensätzen, erkennbar. Ferner können beim Überfahren einer beschädigten Rolle Beschleunigungen entlang der Fahrtrichtung hervorgerufen werden, die mittels des Vibrationssensors erfassbar sind. Dementsprechend ist eine beschädigte Rolle auch anhand von erfassten Vibrationen bzw. veränderlichen Beschleunigungen in Fahrtrichtung erkennbar. Des Weiteren kann die Prüfvorrichtung mit einem Infrarotsensor ausgestattet sein, der dazu ausgebildet ist, eine Temperatur einer überfahrenen Rolle zu erfassen. Dadurch sind übermäßige Erwärmungen an Rollen erkennbar, die beispielsweise durch beschädigte Rollenlager hervorgerufen werden.

Die oben beschriebene Aufgabe wird auch durch ein erfindungsgemäßes Verfahren zum Prüfen eines Schädigungszustands eines Rollentransportsystems gelöst. Das Rollentransportsystem weist eine Mehrzahl an Rollen auf, die durch eine Prüfvorrichtung prüfbar sind. Mittels des Verfahrens ist der Schädigungszustand einer einzelnen Rolle oder einer Mehrzahl an Rollen prüfbar. Das Verfahren umfasst einen ersten Schritt, in dem das Rollentransportsystem in einem aktiven Betriebszustand bereitgestellt wird. Im aktiven Betriebszustand werden Rollen des Rollentransportsystems angetrieben, so dass ein Transportgut auf dem Rollentransportsystem bewegt wird. Im ersten Schritt erfolgt auch ein Erfassen von Vibrationen einer Mehrzahl an Rollen. Die Vibrationen können Vibrationen senkrecht zu einer Drehachse der jeweiligen Rollen sein und/oder Vibrationen entlang einer Drehachse der jeweiligen Rollen. Das Verfahren umfasst ferner einen zweiten Schritt, in dem ein Schädigungszustand zumindest einer der Rollen anhand der Vibrationen erkannt wird, die im ersten Schritt erfasst werden. Das Erkennen des Schädigungszustands kann beispielsweise anhand einer Künstlichen Intelligenz erfolgen, die die im ersten Schritt erfassten Vibrationen auswertet. Weiter weist das Verfahren einen dritten Schritt auf, im dem eine Warnung an einen Benutzer und/oder eine Datenschrittstelle ausgegeben wird. Die Warnung kann im dritten Schritt ausgegeben werden, wenn im zweiten Schritt ein bestimmungswidriger Schädigungszustand zumindest einer Rolle erkannt wird. Die Warnung kann als optisches und/oder akustisches Signal ausgebildet sein. Die Warnung kann auch eine Bezeichnung oder Ortsangabe der entsprechenden Rolle umfassen, bei der der bestimmungswidrige Schädigungszustand erkannt ist. Das Erkennen des bestimmungswidrigen Schädigungszustands kann unter Verwendung eines entsprechenden Schwellenwerts erfolgen.

Erfindungsgemäß fährt die Prüfvorrichtung zumindest während des ersten Schritts als Transportgut auf dem Rollentransportsystem. Dazu kann die Prüfvorrichtung an einer Position entlang des Rollentransportsystems auf Rollen gesetzt werden. Die Prüfvorrichtung kann dabei an eine vorgebbare Position auf dem Rollentransportsystem gefahren werden. Die Prüfvorrichtung verwirklicht damit auf dem Rollentransportsystem im Wesentlichen das Konzept eines Schienenprüffahrzeugs, das Eisenbahnschienen auf Fehler prüft. Vibrationssensoren, die mit dem Rollentransportsystem verbunden sind und Vibrationen an einzelnen Rollen erfassen, sind folglich entbehrlich. Durch das erfindungsgemäße Verfahren wird eine einfache, zuverlässige und wirtschaftliche Prüfung von Rollen eines Rollentransportsystems verwirklicht. Da Vibrationssensoren am Rollentransportsystem selbst entbehrlich sind, sind auch kostenintensive Vibrationssensoren in der Prüfvorrichtung wirtschaftlich einsetzbar. Insgesamt ist durch das erfindungsgemäße Verfahren ein frühzeitiges Erkennen von bestimmungswidrigen Schädigungszuständen möglich, Ausfallzeiten reduzierbar und das Rollentransportsystem wirtschaftlicher betreibbar.

In einer Ausführungsform des beanspruchten Verfahrens ist die Prüfvorrichtung nach einer der oben skizzierten Ausführungsformen ausgebildet. Die einzelnen Merkmale der Prüfvorrichtung sind separat oder in jeglicher Kombination analog auf das beanspruchte Verfahren übertragbar. Die beanspruchten Prüfvorrichtungen erlauben es, das beanspruchte Verfahren in besonders effizienter Weise auszuführen und die damit verbundenen technischen Vorteile verstärkt auszuschöpfen.

Des Weiteren kann der zweite Schritt des beanspruchten Verfahrens mittels einer Künstlichen Intelligenz durchgeführt werden, die durch vorherige Fahrten der Prüfvorrichtung auf dem Rollentransportsystem trainiert ist. Bei den vorherigen Fahrten können Trainingsdatensätze bereitgestellt werden, anhand derer die Künstliche Intelligenz trainierbar ist. Die Künstliche Intelligenz kann beispielsweise als Machine-Learning-Algorithmus ausgebildet sein, insbesondere als Neuronales Netz. Das beanspruchte Verfahren ist durch weitere Fahrten der Prüfvorrichtung auf dem Rollentransportsystem selbsttätig weiterentwickelbar. Dadurch, dass die Prüfvorrichtung kompakt ist und auf dem Rollentransportsystem mitfahren kann ohne einen gleichzeitigen Produktivbetrieb zu beeinträchtigen, sind zusätzliche Trainingsfahrten zum Erzeugen von Trainingsdatensätzen in einfacher Weise umsetzbar. Ebenso können die vorherigen Fahrten, also Trainingsfahrten, der Prüfvorrichtung auf dem Rollentransportsystem in einem Gut-Zustand erfolgen. Dadurch wird die Aussagekraft und Zuverlässigkeit der Erkennung bestimmungswidriger Schädigungszustände von Rollen erhöht. Ebenso können Trainingsdatensätze zur Verwendung in anderen bautypengleichen oder bautypenähnlichen Prüfvorrichtungen bereitgestellt werden. Das beansprucht Verfahren erlaubt es damit, eine Mehrzahl an Prüfvorrichtungen selbsttätig weiterzubilden, also weiter zu trainieren. Die Trainingsdatensätze können über eine kommunikative Datenverbindung, beispielsweise eine Netzwerkverbindung, eine Internetverbindung oder eine Mobilfunkverbindung für andere Prüfvorrichtungen bereitgestellt werden. Der Erfindung liegt unter anderem die überraschende Erkenntnis zugrunde, dass entsprechende Trainingsdatensätze, die auf unterschiedlichen Rollentransportsystemen erzeugt sind, dazu geeignet sind, Prüfvorrichtungen weiterzubilden, die typischerweise auf anderen Rollentransportvorrichtungen eingesetzt werden. Das beanspruchte Verfahren ist dazu geeignet, seine Leistungsfähigkeit selbsttätig zu steigern.

In einer weiteren Ausführungsform des beanspruchten Verfahrens können im ersten Schritt Vibrationen von einer ersten Rolle und einer benachbarten zweiten Rolle erfasst werden, deren Messsignalanteile voneinander separiert werden. Dementsprechend werden im ersten Schritt Vibrationen der ersten und zweiten Rolle zumindest teilweise gleichzeitig erfasst. Die erste und zweite Rolle sind in Fahrtrichtung hintereinander angeordnet. Das Separieren erfolgt beispielsweise durch eine sogenannte Fast-Fourier-Transformation. Weiter können Messwerte zu erfassten Vibrationen in der Prüfvorrichtung gespeichert werden und/oder mittels eines Datenkompressionsalgorithmus komprimiert werden. Erfasste Messwerte können ebenso während des beanspruchten Verfahrens über eine Kommunikationseinheit von der Prüfvorrichtung auf eine übergeordnete Auswertungseinheit übertragen werden, die stationär sein kann. Die übergeordnete Auswertungseinheit gehört nicht zur Prüfvorrichtung selbst und kann selbst mit einer Steuereinheit des Rollentransportsystems gekoppelt sein oder ein Teil davon sein.

Die eingangs dargelegte Aufgabenstellung wird ebenso durch ein erfindungsgemäßes Computerprogrammprodukt gelöst. Das Computerprogrammprodukt ist zu einem Erkennen eines Schädigungszustands einer Rolle eines Rollentransportsystems ausgebildet. Dazu ist das Computerprogrammprodukt dazu ausgebildet, Messwerte von zumindest einem Vibrationssensor einer Prüfvorrichtung zu empfangen und zu verarbeiten. Des Weiteren ist das Computerprogrammprodukt dazu ausgebildet, eine Warnung an einen Benutzer und/oder eine Datenschnittstelle auszugeben. Erfindungsgemäß ist das Computerprogrammprodukt dazu ausgebildet, eine Ausführungsform des oben skizzierten Verfahrens zumindest teilweise durchzuführen. Das Computerprogrammprodukt kann monolithisch ausgebildet sein, also auf einer einzigen Hardwareplattform ausführbar sein. Das Computerprogrammprodukt kann alternativ modular ausgebildet sein, also eine Mehrzahl an Teilprogrammen umfassen, die auf unterschiedlichen Hardwareplattformen ausführbar sind und die über eine kommunikative Datenverbindung zusammenwirken um das beanspruchte Verfahren durchzuführen.

Weiter wird die zugrundeliegende Aufgabe durch ein erfindungsgemäßes Diagnosesystem gelöst, das zum Erkennen eines Schädigungszustands einer Rolle eines Rollentransportsystems ausgebildet ist. Das Diagnosesystem umfasst eine übergeordnete Auswertungseinheit und eine Prüfvorrichtung, die über eine kommunikative Datenverbindung miteinander verbindbar sind. Erfindungsgemäß ist die Prüfvorrichtung nach einer der oben beschriebenen Ausführungsformen ausgebildet. Alternativ oder ergänzend kann die übergeordnete Auswertungseinheit mit einem Computerprogrammprodukt nach einer der oben dargelegten Ausführungsformen ausgestattet sein. Die übergeordnete Auswertungseinheit kann mit einer Steuereinheit des Rollentransportsystems gekoppelt sein oder Teil der Steuereinheit sein. Die übergeordnete Auswertungseinheit kann stationär sein, also mit dem Rollentransportsystem verbunden. Alternativ kann die Prüfvorrichtung mit der übergeordneten Auswertungseinheit ausgestattet sein, insbesondere kann die übergeordnete Auswertungseinheit in oder an der Prüfvorrichtung angebracht sein. Ferner kann die übergeordnete Auswertungseinheit dazu ausgebildet sein, eine Warnung an einen Benutzer und/oder eine Datenschnittstelle auszugeben. Die Warnung kann als optisches und/oder akustisches Signal ausgebildet sein. Die Merkmale der beanspruchten Prüfvorrichtung, des beanspruchten Verfahrens und/oder die Merkmale des beanspruchten Computerprogrammprodukts sind einzeln oder in Kombination auf das beanspruchte Diagnosesystem übertragbar.

Ferner wird die eingangs skizzierte Aufgabenstellung durch ein erfindungsgemäßes Simulationsprogrammprodukt gelöst, das zu einem Simulieren eines Betriebsverhaltens einer Prüfvorrichtung ausgebildet ist. Die Prüfvorrichtung ist als Transportgut auf einem Rollentransportsystem transportierbar ausgebildet. Die Prüfvorrichtung ist dazu ausgebildet, einen Schädigungszustand von Rollen des Rollentransportsystems zu prüfen. Das Betriebsverhalten kann unter anderem das Nachstellen eines Erfassens von Vibrationen zumindest einer der Rollen umfassen, die durch die Prüfvorrichtung geprüft werden. Ebenso kann das Betriebsverhalten das Erzeugen korrespondierender Messsignale, also Messwerte, umfassen und/oder deren Auswertung und Erkennung von Schädigungszuständen an entsprechenden Rollen. Die nachgestellten, also simulierten Messwerte, können durch das Simulationsprogrammprodukt ausgegeben werden. Erfindungsgemäß ist die Prüfvorrichtung gemäß einer der oben skizzierten Ausführungsformen ausgebildet. Der Erfindung liegt unter anderem die Erkenntnis zugrunde, dass eine Funktionsweise einer derartigen Prüfvorrichtung mit reduziertem Rechenaufwand modellierbar ist, wodurch diese im Wesentlichen in Echtzeit nachstellbar, also simulierbar, ist.

Das Simulationsprogrammprodukt kann insbesondere Befehle umfassen, die bei einem Ausführen einen Computer veranlassen, das Betriebsverhalten einer entsprechend ausgebildeten Prüfvorrichtung zu simulieren. Insbesondere kann das Betriebsverhalten simuliert werden, das bei einer Fahrt der Prüfvorrichtung als Transportgut auf einem ebenso simulierten Rollentransportsystem auftritt. Hierzu kann das Simulationsprogrammprodukt mit einer Wissensdatenbank verbunden sein, in der Vibrationsprofile baugleicher und/oder bauähnlicher Rollen bzw. deren Komponenten gespeichert sein können. Folglich sind typische Schädigungszustände für das Simulationsprogrammprodukt vorgebbar und ein erwartetes Erkennungsverhalten der Prüfvorrichtung simulierbar. Alternativ oder ergänzend kann das Simulationsprogrammprodukt über eine Datenschnittstelle verfügen, über die Messwerte zu Vibrationen eines Sensors als Eingaben vorgebbar sind, die an einer Rolle bzw. einer ihrer Komponenten angebracht sind. Dadurch ist die Funktionstüchtigkeit der Prüfvorrichtung über das Simulationsprogrammprodukt verifizierbar. Das Simulationsprogrammprodukt kann als sogenannter Digitaler Zwilling einer entsprechenden Prüfvorrichtung ausgebildet sein. Der Digitale Zwilling ist bei einem Simulieren eines Betriebsverhaltens eines korrespondierend eingesetzten Prüfvorrichtung verwendbar. Der Digitale Zwilling kann beispielsweise gemäß US 2017/268572 A1 ausgebildet sein. Der Offenbarungsgehalt von US 2017/268572 A1 wird durch Verweisung in die vorliegende Anmeldung miteinbezogen. Das simulierte Rollentransportsystem, das von der simulierten Prüfvorrichtung durchfahren wird, kann analog ebenfalls als Digitaler Zwilling eines korrespondierenden Rollentransportsystems ausgebildet sein, der ebenso bei einem Simulieren des Betriebsverhaltens eines solchen Rollentransportsystems verwendbar ist. Das Simulationsprogrammprodukt kann ferner dazu ausgebildet sein, Steuerbefehle auszugeben, mit denen das Rollentransportsystem betreibbar ist. Beispielsweise kann durch den Steuerbefehl das Rollentransportsystem derart betrieben werden, dass ein Abschnitt mit einer beschädigten Rolle nicht genutzt wird, so dass an der beschädigten Rolle eine Reparatur durchführbar ist. Das Simulationsprogrammprodukt kann eine Datenschnittstelle aufweisen, durch die Betriebsparameter vorgebbar sind. Alternativ oder ergänzend kann das Simulationsprogrammprodukt eine Datenschnittstelle zum Ausgeben von Simulationsergebnissen aufweisen, beispielsweise an andere simulationsgerichtete Computerprogramme, insbesondere den Digitalen Zwilling des Rollentransportsystems. Mittels des erfindungsgemäßen Simulationsprogrammprodukts ist der Betrieb des Rollentransportsystems in vorteilhafter Weise planbar und steuerbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner ist die in den Figuren gezeigte Ausführungsformen mit den oben skizzierten Merkmalen kombinierbar. Es zeigen im Einzelnen:
- FIG 1: schematisch eine erste Ausführungsform der beanspruchten Prüfvorrichtung in einer Seitenansicht;
- FIG 2: schematisch einen Teil der ersten Ausführungsform in einer Schrägansicht;
- FIG 3: schematisch eine zweite Ausführungsform der beanspruchten Prüfvorrichtung in einer Seitenansicht.

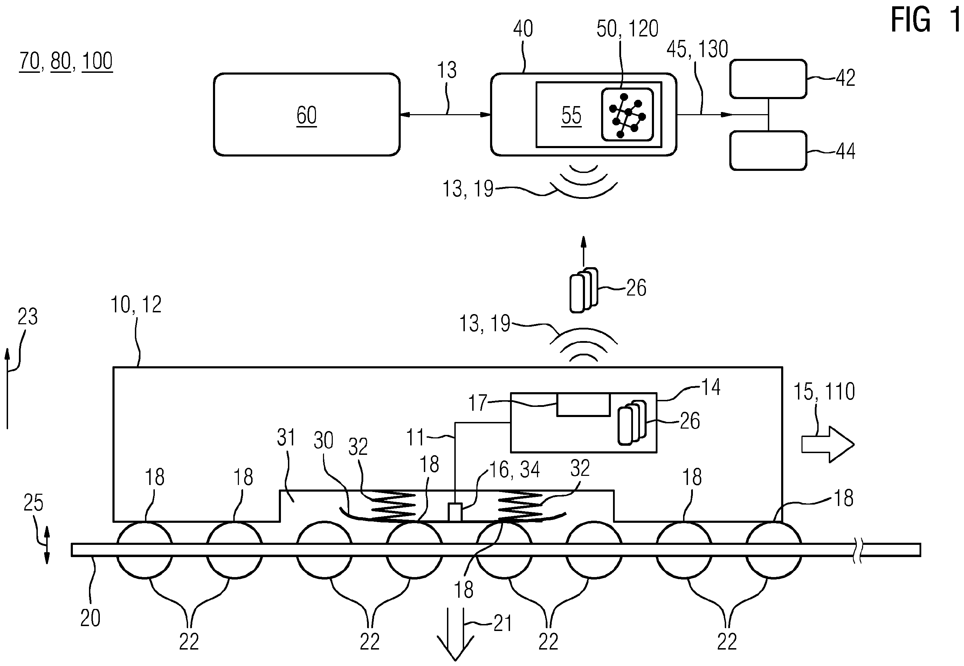

In FIG 1 ist schematisch eine erste Ausführungsform der beanspruchten Prüfvorrichtung 10 in einer Seitenansicht gezeigt, die zu einem Diagnosesystem 70 gehört und in einem Rollentransportsystem 20 verwendet wird. Das Rollentransportsystem 20 umfasst eine Mehrzahl an Rollen 22, die nebeneinander angeordnet sind und zu einem Transportieren von Transportgütern in eine Fahrtrichtung 15 ausgebildet sind. Die Rollen 22 können jeweils angetriebene Rollen sein, also mit einem Antrieb gekoppelt sein, oder als freilaufende Rollen ausgebildet sein. Die Prüfvorrichtung 10 dient dazu, einen vorliegenden Schädigungszustand der Rollen 22 zu prüfen, wobei der Schädigungszustand umfasst Schädigungen aufgrund unsachgemäßer Handhabung und Verschleiß an der Rolle bzw. deren Komponenten, beispielsweise Lager, Antriebsverzahnungen oder Antriebe. Die Prüfvorrichtung 10 umfasst einen Grundkörper 12, der bei Verwendung der Prüfvorrichtung 10 auf den Rollen 22 aufliegt und mit einer Mehrzahl an Rollen 22 je einen Kontakt 18 bildet. Der Grundkörper 12 liegt an seinen Kontakten 18 mit den Rollen 22 auf diesen auf und übt eine Gewichtsbelastung 21 aus. Weiter wird der Grundkörper 12, also die Prüfvorrichtung 10, während seiner Verwendung entlang der Fahrtrichtung 15 als Transportgut auf dem Rollentransportsystem 20 transportiert.

Die Prüfvorrichtung 10 ist mit einem Vibrationssensor 16 versehen, der als Beschleunigungssensor 34 ausgebildet ist. Der Vibrationssensor 16 ist auf einem Sensorträger 30 befestigt, der in einer Rücknahme 31 am Grundkörper 12 angebracht ist. Die Rücknahme 31 ist an einer der den Rollen 22 zugewandten Seite des Grundkörpers 12 ausgebildet. Der Sensorträger 30 ist über Federelemente 32 elastisch an der Prüfvorrichtung 10 befestigt. Der Sensorträger 30 ist als Kufe ausgebildet und der Vibrationssensor 16 ist in einem mittleren Abschnitt des Sensorträgers 30 positioniert. Weiter ist der Vibrationssensor 16, entlang der Fahrtrichtung 15 betrachtet, zwischen den Federelementen 32 angebracht. Der Sensorträger 30 bildet Kontakte 18 mit Rollen 22 im Bereich der Rücknahme 31, so dass Vibrationen 25 der Rollen 22 entlang einer Querrichtung 23 bei einem Überfahren der entsprechenden Rollen 22 auf den Sensorträger 30 übertragen werden. Der Sensorträger 30, und folglich auch der damit verbundene Vibrationssensor 16 werden den Vibrationen 25 an den korrespondierenden Rollen 22 unterworfen. Die Vibrationen 25 werden beim Überfahren der Rollen 22 durch den Vibrationssensor 16 erfasst. Der Vibrationssensor 16 ist über eine Datenverbindung 11 mit einem Speicher 14 verbunden. Bei einer Fahrt der Prüfvorrichtung 10 auf dem Rollentransportsystem erfasste Vibrationen 25 werden darin in Form von Datensätzen 26 zu einer weiteren Auswertung gespeichert. Der Speicher 14 ist mit einer Kommunikationseinheit 17 gekoppelt, die dazu ausgebildet ist, Datensätze 26 über eine kommunikative Datenverbindung 13, die als Funkverbindung 19 ausgebildet ist, an eine übergeordnete Auswertungseinheit 40 zu übertragen. Die Datensätze 26 können während und/oder nach einer Fahrt der Prüfvorrichtung 10 auf dem Rollentransportsystem 20 übertragen werden.

Die übergeordnete Auswertungseinheit 40 ist dazu geeignet, die Datensätze 26 zu empfangen und zu verarbeiten. Hierzu ist die übergeordnete Auswertungseinheit 40 mit einem entsprechenden Computerprogrammprodukt 55 ausgestattet, das eine Künstliche Intelligenz 50 umfasst, die als Machine-Learning-Algorithmus, insbesondere als neuronales Netz, ausgebildet ist. Datensätze 26, die bei Fahrten der Prüfvorrichtung 10 auf dem Rollentransportsystem 20 erstellt sind, sind als Trainingsdatensätze einsetzbar. Dementsprechend ist die Künstliche Intelligenz 50 trainierbar. Beispielsweise können in einem oder mehreren Datensätzen 26 Vibrationen 25 gespeichert sein, die in einem Gut-Zustand des Rollentransportsystems 20 ermittelt sind. Der so erfasste Gut-Zustand kann als Referenzzustand dienen, der zum Ermitteln eine bestimmungswidrigen Schädigungszustands eingesetzt wird. Durch das Computerprogrammprodukt 55 wird ein Datensatz 26 ausgewertet, der bei einer Fahrt der Prüfvorrichtung 10 auf dem Rollentransportsystem 20 erstellt ist und auf das Vorliegen eines bestimmungswidrigen Schädigungszustands geprüft. Dazu werden die in den Datensätzen 26 gespeicherten Vibrationen 25 mittels der Künstlichen Intelligenz 50 ausgewertet. Wird ein bestimmungswidriger Schädigungszustand erkannt, wird über eine Benutzerschnittstelle 42 eine Warnung 45 an einen Benutzer ausgegeben. Alternativ oder ergänzend wird die Warnung 45 über eine Datenschnittstelle 44 ausgegeben. Die übergeordnete Auswertungseinheit 40 ist ferner über eine kommunikative Datenverbindung 13 mit einer Steuereinheit 60 des Rollentransportsystems 20 verbunden. Die über die Datenschnittstelle 44 ausgegebene Warnung 45 kann an die Steuereinheit 60 ausgegeben werden, um auf den erkannten bestimmungswidrigen Schädigungszustand zu reagieren.

Weiter wird beim Verwenden der Prüfvorrichtung eine Ausführungsform des beanspruchten Verfahrens 100 durchgeführt. Das Verfahren 100 dient zum Prüfen eines Schädigungszustands des Rollentransportsystems 20. Dabei werden die Rollen 22 mittels der Prüfvorrichtung 10 geprüft. Das Verfahren 100 geht von einem ersten Schritt 110 aus, in dem das Rollentransportsystem 20 in einem aktiven Betriebszustand bereitgestellt wird und mittels der Prüfvorrichtung 10 Vibrationen 25 von mehreren Rollen 22 erfasst werden. Die erfassten Vibrationen 25 können als Datensätze 26 im Speicher 14 gespeichert werden. Während des ersten Schritts 110 wird die Prüfvorrichtung 10 als Transportgut auf dem Rollentransportsystem transportiert. Weiter umfasst das Verfahren 100 einen zweiten Schritt 120, in dem der Schädigungszustand zumindest einer der Rollen 22, insbesondere einer überfahrenen Rolle 22, erkannt wird. Dies erfolgt basierend auf den Vibrationen 25, die beim Überfahren der entsprechenden Rolle 22 erfasst werden. Der zweite Schritt 120 wird mittels des Computerprogrammprodukts 55 durchgeführt. Zum Durchführen des zweiten Schritts 120 werden Datensätze 26 nach der Fahrt auf dem Rollentransportsystem 20 oder währenddessen an die übergeordnete Auswertungseinheit 40 übertragen. Ferner weist das Verfahren 100 einen dritten Schritt 130 auf, in dem die Warnung 45 an den Benutzer und/oder die Datenschnittstelle 44 ausgegeben wird. Die Warnung 45 wird ausgegeben, wenn im zweiten Schritt 120 durch das Computerprogrammprodukt 55 ein bestimmungswidriger Schädigungszustand der entsprechenden Rolle 22 ermittelt wird.

Die Prüfvorrichtung 10 und die übergeordnete Auswertungseinheit 40 gehören zum Diagnosesystem 70, das mit dem Rollentransportsystem 20 zumindest gekoppelt ist. Das Diagnosesystem 70 kann alternativ auch zumindest als Funktionseinheit zur Steuereinheit 60 des Rollentransportsystems 20 gehören, also von diesem umfasst sein. Die Prüfvorrichtung 10 ist in einem Simulationsprogrammprodukt 80 nachgestellt. Das Simulationsprogrammprodukt 80 ist als Digitaler Zwilling der Prüfvorrichtung 10 ausgebildet und kann dazu geeignet sein, eine korrespondierend ausgebildete Prüfvorrichtung 10 im Betrieb zu überwachen und/oder von dieser übertragene Datensätze 26 auf Plausibilität zu überprüfen. Das Simulationsprogrammprodukt 80 kann dazu ausgebildet sein, mit einem Digitalen Zwilling des Rollentransportsystems 20 zusammenzuwirken. Dementsprechend ist der Betrieb der Prüfvorrichtung 10 auf dem Rollentransportsystem 20 simulierbar.

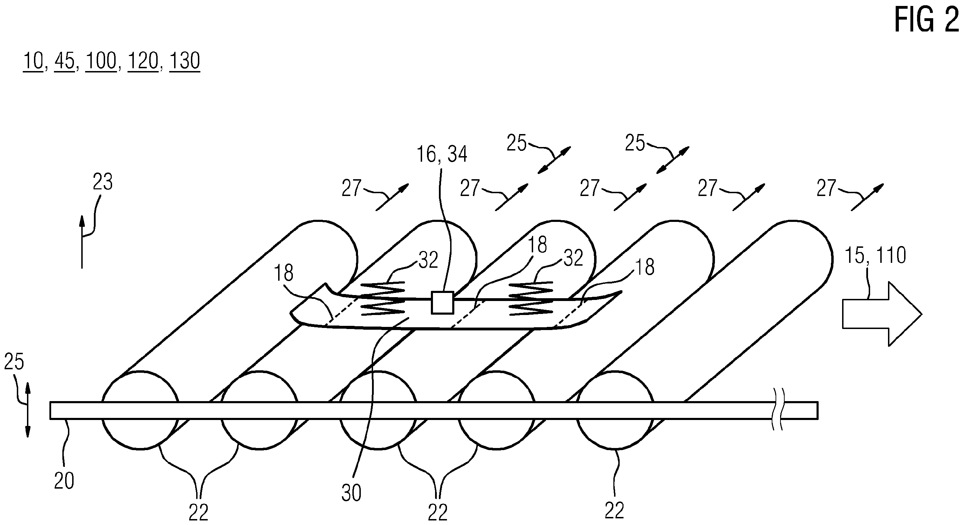

Ein Teil der ersten Ausführungsform der beanspruchten Prüfvorrichtung 10 ist in FIG 2 schematisch in einer Schrägansicht dargestellt. In FIG 2 ist im Wesentlichen der Grundkörper 12 der Prüfvorrichtung 10, wie in FIG 1 gezeigt, nicht dargestellt. Im Einzelnen zeigt FIG 2 einen Sensorträger 30, der als Kufe ausgebildet ist und beim Verwenden der Prüfvorrichtung 10 auf Rollen 22 eines Rollentransportsystems 20 entlang einer Fahrtrichtung 15 bewegt wird. Am Sensorträger 30 ist ein Vibrationssensor 16 befestigt, der zwischen Federelementen 32 angeordnet ist. Der Sensorträger 30 ist über die Federelemente 32 elastisch an der Prüfvorrichtung 10 befestigt. Der Sensorträger 30 bildet mit benachbarten Rollen 22 jeweils einen im Wesentlichen linienförmigen Kontakt 18. Dementsprechend ist der Sensorträger 30, und damit auch der Vibrationssensor 16 gleichzeitig den Vibrationen 25 an den entsprechenden Rollen 22 unterworfen. Die Rollen 22 können entlang einer Querrichtung 23 und/oder entlang einer Achsrichtung 27 vibrieren. Der Vibrationssensor 16 ist als Beschleunigungssensor 34 ausgebildet und den kombinierten Vibrationen 25 der Rollen 22 entlang der Querrichtung 23, der Achsrichtung 27 oder einer Kombination hieraus unterworfen. Der Vibrationssensor 16 kann dementsprechend dazu ausgebildet, Vibrationen 25 entlang der Querrichtung 23 und/oder der Achsrichtung 27 zu erfassen.

Die Vibrationen 25 einzelner Rollen 22 sind dadurch voneinander unterscheidbar, wenn der Kontakt 18 mit einer Rolle 22 gelöst wird, die entlang der Fahrtrichtung 15 hinten liegt. Durch eine Frequenzanalyse der erfassten überlagerten Vibrationen 25 ist ein Vibrationsanteil der Rolle 22 isolierbar, der sich aus einem Vergleich der überlagerten Vibrationen 25 vor und nach dem Lösen des entsprechenden Kontakts 18 an der in Fahrtrichtung 15 hinten liegenden Rollen 22 ergibt. Dies gilt gleichermaßen für Vibrationen 25 in Querrichtung 23 und Achsrichtung 27.

Der Sensorträger 30, und damit die Prüfvorrichtung 10, wird während eines Verfahrens 100 zum Prüfen eines Schädigungszustands der Rollen 22 verwendet. Das Verfahren 100 geht von einem ersten Schritt 110 aus, in dem die Prüfvorrichtung 10 auf Rollen 22 des Rollentransportsystems 20 als Transportgut entlang der Fahrtrichtung 15 bewegt wird. Während des ersten Schritts 110 werden mittels des Vibrationssensors 16 Vibrationen 25 der Rollen 22 erfasst, die einen Kontakt 18 mit dem Sensorträger 30 bilden. In einem nicht näher gezeigten Schritt 120 wird durch Auswerten der erfassten Vibrationen 25 ein Schädigungszustand zumindest einer der Rollen 22 erkannt. Dazu kann der Vibrationsanteil der entsprechenden Rolle 22 durch Frequenzanalyse aus erfassten überlagerten Vibrationen 25 der vom Sensorträger 30 kontaktierten Rollen 22 isoliert werden. Wenn ein bestimmungswidriger Schädigungszustand der entsprechenden Rolle 22 im zweiten Schritt 120 erkannt wird, wird in einem nicht näher gezeigten dritten Schritt 130 eine Warnung 45 ausgegeben. Das Betriebsverhalten der Prüfvorrichtung 10 wird durch ein Simulationsprogrammprodukt 80 nachgestellt. Der Sensorträger 30 ist in seinem Vibrationsverhalten durch seine Masse und die Federelemente 32, die eine bekannte Federkonstante und Dämpfungskonstante aufweisen, mit relativ geringem Rechenaufwand modellierbar. Das Simulationsprogrammprodukt 80 ist als Digitaler Zwilling der Prüfvorrichtung 10 ausgebildet und im Wesentlichen dazu geeignet, das Betriebsverhalten der Prüfvorrichtung 10 im Wesentlichen in Echtzeit nachzustellen. Ferner ist der Sensorträger 30, unter anderem durch die Federelemente 32, dazu ausgebildet, beim Überfahren der Rollen 22 eine Pendelbewegung durchzuführen, die durch den Vibrationssensor 16 erfasst wird und durch die übergeordnete Auswertungseinheit 40 erkennbar ist. Im Verfahren 100 kann eine Periodizität der Pendelbewegung ermittelt werden, anhand der die Anzahl an überfahrenen Rollen 22 ermittelbar ist. Dadurch ist für die Prüfvorrichtung eine Positionsbestimmung durchführbar.

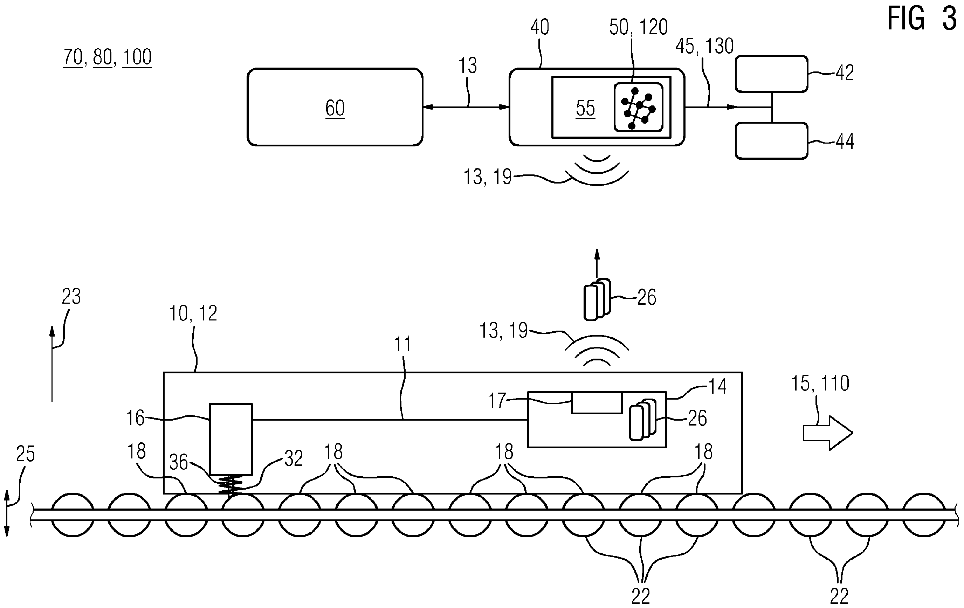

In FIG 3 ist eine zweite Ausführungsform der beanspruchten Prüfvorrichtung 10 in einer Seitenansicht schematisch dargestellt. Die Prüfvorrichtung 10 weist einen Grundkörper 12 auf und wird als Transportgut auf einem Rollentransportsystem 20 mit einer Mehrzahl an Rollen 22 bewegt. Die Prüfvorrichtung 10 wird hierbei entlang einer Fahrtrichtung 15 bewegt. Der Grundkörper 12 bildet mit den überfahrenen Rollen 22 jeweils einen Kontakt 18 aus, der im Wesentlichen linienförmig ist. Die Prüfvorrichtung 10 ist mit einem Vibrationssensor 16 versehen, der einen Stößel 36 umfasst, der durch ein Federelement 32 vorgespannt ist und mit einer nicht näher gezeigten Wegerfassung ausgestattet ist. Der Stößel 36 ist dazu ausgebildet, eine überfahrene Rolle 22 abzutasten und dadurch die Vibrationen 25 zu erfassen, die an der entsprechenden Rolle 22 vorliegen. Der Vibrationssensor 16 mit dem Stößel 36 ist dazu ausgebildet, Vibrationen 25, insbesondere Vibrationen 25 entlang einer Querrichtung 23, einer einzelnen Rolle 22 zu erfassen, wenn diese einzelne Rolle 22 überfahren wird. Dies erlaubt ein besonders präzises Erfassen der jeweiligen Vibrationen 25. Der Vibrationssensor 16 ist über eine Datenverbindung 11 mit einem Speicher 14 verbunden, der dazu ausgebildet ist, erfasste Vibrationen 25 in Datensätzen 26 zu speichern. Der Speicher 14 ist mit einer Kommunikationseinheit 17 verbunden, die dazu ausgebildet ist, eine kommunikative Datenverbindung 13, insbesondere eine Funkverbindung 19, mit einer übergeordneten Auswertungseinheit 40 herzustellen. Über die kommunikative Datenverbindung 13 sind Datensätze 26 an die übergeordnete Auswertungseinheit 40 übertragbar.

Die Datensätze 26, die von der übergeordneten Auswertungseinheit 40 empfangen werden, sind durch ein Computerprogrammprodukt 55 verarbeitbar, das eine Künstliche Intelligenz 50 umfasst, um einen bestimmungswidrigen Schädigungszustand zumindest einer Rolle 22 zu erkennen. Wenn ein bestimmungswidriger Schädigungszustand zumindest einer der Rollen 22 erkannt wird, wird eine Warnung 45 an eine Benutzerschnittstelle 42 und/oder eine Datenschnittstelle 44 ausgegeben. Die übergeordnete Auswertungseinheit 40 ist ferner über eine kommunikative Datenverbindung 13 mit einer Steuereinheit 60 des Rollentransportsystems 20 verbunden. Die über die Datenschnittstelle 44 ausgegebene Warnung 45 kann an die Steuereinheit 60 ausgegeben werden, um auf den erkannten bestimmungswidrigen Schädigungszustand zu reagieren.

Mit der in FIG 3 gezeigten Prüfvorrichtung 10 wird eine Ausführungsform des beanspruchten Verfahrens 100 zum Prüfen des Schädigungszustands einer Rolle 22 des Rollentransportsystems 20 durchgeführt. Das Verfahren 100 geht von einem ersten Schritt 110 aus, in dem die Prüfvorrichtung 10 als Transportgut entlang der Fahrtrichtung 15 auf dem Rollentransportsystem 20 transportiert wird. Das Verfahren 100 umfasst einen zweiten Schritt 120, in dem über den Vibrationssensor 16 Vibrationen 25 zumindest einer der Rollen 22 erfasst wird. Im zweiten Schritt 120 werden auch entsprechende Datensätze 26 an die übergeordnete Auswertungseinheit 40 übertragen. Das Übertragen der Datensätze 26 an die übergeordnete Auswertungseinheit 40 kann nach der Fahrt der Prüfvorrichtung 10 auf dem Rollentransportsystem 20 erfolgen oder währenddessen. Das Erkennen des bestimmungswidrigen Schädigungszustands erfolgt mittels der Künstlichen Intelligenz 50, die zum Computerprogrammprodukt 55 gehört. Wenn im zweiten Schritt 120 ein bestimmungswidriger Schädigungszustand der zumindest einen Rolle 22 erkannt wird, wird in einem dritten Schritt 130 eine Warnung 45 ausgegeben. Die Warnung 45 wird über eine Benutzerschnittstelle 42 eine Warnung 45 an einen Benutzer ausgegeben. Alternativ oder ergänzend wird die Warnung 45 über eine Datenschnittstelle 44 ausgegeben. Die übergeordnete Auswertungseinheit 40 ist ferner über eine kommunikative Datenverbindung 13 mit einer Steuereinheit 60 des Rollentransportsystems 20 verbunden. Die über die Datenschnittstelle 44 ausgegebene Warnung 45 kann an die Steuereinheit 60 ausgegeben werden, um auf den erkannten bestimmungswidrigen Schädigungszustand zu reagieren. Die Prüfvorrichtung 10 und die übergeordnete Auswertungseinheit 40 mit dem Computerprogrammprodukt 55 gehören zu einem Diagnosesystem 70, das mit dem Rollentransportsystem 20 gekoppelt ist. Das Diagnosesystem 70 kann alternativ auch zumindest als Funktionseinheit zur Steuereinheit 60 des Rollentransportsystems 20 gehören, also von diesem umfasst sein. Die Prüfvorrichtung 10 ist in einem Simulationsprogrammprodukt 80 nachgestellt. Das Simulationsprogrammprodukt 80 ist als Digitaler Zwilling der Prüfvorrichtung 10 ausgebildet und kann dazu geeignet sein, eine korrespondierend ausgebildete Prüfvorrichtung 10 im Betrieb zu überwachen und/oder von dieser übertragene Datensätze 26 auf Plausibilität zu überprüfen. Das Simulationsprogrammprodukt 80 kann dazu ausgebildet sein, mit einem Digitalen Zwilling des Rollentransportsystems 20 zusammenzuwirken. Dementsprechend ist der Betrieb der Prüfvorrichtung 10 auf dem Rollentransportsystem 20 simulierbar. Dadurch, dass mittels des Vibrationssensors 16 mit einem Stößel 36 nur jeweils die Vibrationen 25 einer einzelnen Rolle 22 erfasst werden, ist eine Frequenzanalyse zum Isolieren eines Messignalanteils einer einzelnen Rolle 22 entbehrlich. Dadurch ist das Betriebsverhalten der Prüfvorrichtung 10 nach FIG 3 im Wesentlichen in Echtzeit simulierbar.

## Patentansprüche

1. Prüfvorrichtung (10) zum Prüfen eines Schädigungszustands von Rollen (22) eines Rollentransportsystems (20), die mit zumindest einem Vibrationssensor (16) zum Erfassen von Vibrationen (25) an zumindest einer der Rollen (22) ausgestattet ist, **dadurch gekennzeichnet, dass** die Prüfvorrichtung (10) zu einer Fahrt als Transportgut auf dem Rollentransportsystem (20) ausgebildet ist und der Vibrationssensor (16) dazu ausgebildet ist, bei einem Überfahren einer der Rollen (22) deren Vibrationen (25) zu erfassen.

2. Prüfvorrichtung (10) nach Anspruch 1, **dadurch gekennzeichnet, dass** der Vibrationssensor (16) als Beschleunigungssensor (34) ausgebildet ist oder einen Stößel (36) mit Wegerfassung () umfasst.

3. Prüfvorrichtung (10) nach Anspruch 2, **dadurch gekennzeichnet, dass** die Prüfvorrichtung (10) dazu ausgebildet ist, anhand von erfassten Auslenkungen des Stößels (36) eine Anzahl an überfahrenen Rollen (22) zu erfassen.

4. Prüfvorrichtung (10) nach einem der Ansprüche 1 bis 3, **dadurch gekennzeichnet, dass** die Prüfvorrichtung (10) mit einem elastisch gelagerten Sensorträger (30) ausgestattet ist, an dem der Vibrationssensor (16) angebracht ist.

5. Prüfvorrichtung (10) nach Anspruch 4, **dadurch gekennzeichnet, dass** der elastisch gelagerte Sensorträger (30) zu einem Kontaktieren von zumindest zwei Rollen (22) an der Prüfvorrichtung (10) angebracht ist.

6. Prüfvorrichtung (10) nach einem der Ansprüche 1 bis 5, **dadurch gekennzeichnet, dass** der Vibrationssensor (16) entlang einer Fahrtrichtung (15) der Prüfvorrichtung (10) zwischen zwei Federelementen (32) angeordnet ist.

7. Prüfvorrichtung (10) nach einem der Ansprüche 4 bis 6, **dadurch gekennzeichnet, dass** die Prüfvorrichtung (10) zu einem Erkennen einer Kurve im Rollentransportsystem (20) mit zwei Vibrationssensoren (16) ausgestattet ist, die zueinander quer zur Fahrtrichtung (15) versetzt angeordnet sind.

8. Prüfvorrichtung (10) nach einem der Ansprüche 1 bis 7, **dadurch gekennzeichnet, dass** die Prüfvorrichtung (10) dazu ausgebildet ist, von angetriebenen und freilaufenden Rollen (22) zu unterscheiden.

9. Prüfvorrichtung (10) nach einem der Ansprüche 1 bis 8, **dadurch gekennzeichnet, dass** die Prüfvorrichtung (10) dazu ausgebildet ist, dass eine vom Vibrationssensor (16) erfasste Rolle (22) frei von einer Gewichtsbelastung (21) durch die Prüfvorrichtung (10) ist.

10. Verfahren (100) zum Prüfen eines Schädigungszustands eines Rollentransportsystems (20) mit einer Mehrzahl an Rollen (22) durch eine Prüfvorrichtung (10), umfassend die Schritte:
a) Bereitstellen des Rollentransportsystems (20) in einem aktiven Betriebszustand und Erfassen von Vibrationen (25) einer Mehrzahl an Rollen (22);
b) Erkennen eines Schädigungszustands zumindest einer der Rollen (22) anhand der in Schritt a) erfassten Vibrationen (25) ;
c) Ausgeben einer Warnung (45) an einen Benutzer und/oder eine Datenschnittstelle (44);
**dadurch gekennzeichnet, dass** die Prüfvorrichtung (10) zumindest während Schritt a) als Transportgut auf dem Rollentransportsystem (20) fährt.

11. Verfahren (100) nach Anspruch 10, **dadurch gekennzeichnet, dass** die Prüfvorrichtung (10) nach einem der Ansprüche 1 bis 9 ausgebildet ist.

12. Verfahren (100) nach Anspruch 10 oder 11, **dadurch gekennzeichnet, dass** Schritt b) mittels einer Künstlichen Intelligenz (50) durchgeführt wird, die durch vorherige Fahrten der Prüfvorrichtung (10) auf dem Rollentransportsystem (20) trainiert ist.

13. Verfahren (100) nach einem der Ansprüche 10 bis 12, **dadurch gekennzeichnet, dass** im Schritt a) Vibrationen (25) von einer ersten Rolle (22) und einer benachbarten zweiten Rolle (22) erfasst werden, deren Messsignalanteile voneinander separiert werden.

14. Computerprogrammprodukt (55) zum Erkennen eines Schädigungszustands einer Rolle (22) eines Rollentransportsystems (20), das dazu ausgebildet ist, Messwerte von einem Vibrationssensor (16) einer Prüfvorrichtung (10) zu verarbeiten und eine Warnung (45) an einen Benutzer und/oder eine Datenschnittstelle (44) auszugeben, **dadurch gekennzeichnet, dass** das Computerprogrammprodukt (55) dazu ausgebildet ist, ein Verfahren (100) nach einem der Ansprüche 10 bis 13 zumindest teilweise durchzuführen.

15. Diagnosesystem (70) zum Erkennen eines Schädigungszustands einer Rolle (22) eines Rollentransportsystems (20), umfassend eine übergeordnete Auswertungseinheit (40) und eine Prüfvorrichtung (10), die über eine kommunikative Datenverbindung (13) miteinander verbindbar sind, **dadurch gekennzeichnet, dass** die Prüfvorrichtung (10) nach einem der Ansprüche 1 bis 9 ausgebildet ist.

16. Simulationsprogrammprodukt (80), das zum Simulieren eines Betriebsverhaltens einer Prüfvorrichtung (10) ausgebildet ist, die als Transportgut auf einem Rollentransportsystem (20) transportierbar ausgebildet ist, **dadurch gekennzeichnet, dass** die Prüfvorrichtung (10) nach einem der Ansprüche 1 bis 9 ausgebildet ist.
